Europäisches Patentamt

European Patent Office

Office européen des brevets

(19)

(11) Veröffentlichungsnummer : **0 062 701**
**B1**

(12)
# EUROPÄISCHE PATENTSCHRIFT

(45) Veröffentlichungstag der Patentschrift :
02.05.84

(51) Int. Cl.³ : **H 04 J   3/12, H 04 Q  11/04**

(21) Anmeldenummer : **81109261.8**

(22) Anmeldetag : **29.10.81**

(54) **Verfahren zur Übertragung von Schleifenzuständen und Zählimpulsen in Fernsprechsystemen.**

(30) Priorität : **09.04.81 DE 3114454**

(43) Veröffentlichungstag der Anmeldung :
**20.10.82 Patentblatt 82/42**

(45) Bekanntmachung des Hinweises auf die Patenterteilung : **02.05.84 Patentblatt 84/18**

(84) Benannte Vertragsstaaten :
**IT NL SE**

(56) Entgegenhaltungen :
DE-B- 2 018 931
THE INTERNATIONAL SYMPOSIUM ON SUBSCRIBER LOOPS AND SERVICES, 15.-19. September 1980, Seiten 56-59, München, Berlin, DE. K. EY et al.: "Pair gain systems PCM30F-s and PCM10 for the subscriber field"
THE INTERNATIONAL SYMPOSIUM ON SUBSCRIVER LOOPS AND SERVICES, 15.-19. September 1980, Seiten 109-113, München; Berlin, DE. C. EASTON: "A sunscriber carrier terminal interface for an integrated digital switching system"

(73) Patentinhaber : **SIEMENS AKTIENGESELLSCHAFT Berlin und München Wittelsbacherplatz 2 D-8000 München 2 (DE)**

(72) Erfinder : **Ehricke, Claus, Dipl.-Ing. Schuckertstrasse 14/9 D-8000 München 70 (DE) .**

# 0 062 701

Verfahren zur Übertragung von Schleifenzuständen und Zählimpulsen in Fernsprechsystemen

Die Erfindung betrifft ein Verfahren zur PCM-Übertragung von Schleifenzuständen und Zählimpulsen für Fernsprechsysteme durch Umsetzung der Leitungszustände auf den a, b, p-Adern in Kennzeichenbits, die an einer vorbestimmten Stelle eines Kennzeichen-Pulsrahmens in einen PCM-Pulsrahmen eingefügt werden und nach der PCM-Übertragung wieder in die entsprechenden Leitungszusände umgesetzt werden.

Es sind verschiedene Arten der Übertragung von Zählimpulsen zusätzlich zu den Schleifenzuständen bekannt. Als Schleifenzustände werden hier Vermittlungskriterien — z. B. Hörer abgenommen — verstanden. In der « Siemens-Zeitschrif » 49 (1975), Heft 7, Seiten 466-472 ist ein Kennzeichenumsetzer für die Übertragung über PCM-Strecken beschrieben. Die verschiedenen Kriterien, z. B. Belegen, Belegungsquittung, Zählimpuls usw. werden mit bis zu vier Kennzeichenbits innerhalb eines kennzeichen-Pulsrahmens übertragen. Der Kennzeichnen-Pulsrahmen ist in jedem PCM-Pulsrahmen enthalten. Die Zählimpulse werden hierbei von der Knotenvermittlung (Charge Point) zur Ortsvermittlung des rufenden Teilnehmers übertragen. Je nach verwendetem Signalisierungssystem muß jedoch eine andere Umsetzung im Kennzeichenumsetzer erfolgen. Hierdurch ist eine Anzahl unterschiedlicher Schaltungen erforderlich. Aus « telcom report » 2 (1979), Beiheft « Digital-Übertragungstechnik », Seite 65 bis Seite 71 ist eine Signalisierung jedoch ohne Zählimpulse mit nur zwei Kennzeichenbits bekannt.

Es ist die Aufgabe der Erfindung, ein einheitliches Verfahren zur Übertragung von Schleifenzuständen und Zählimpulsen mit einer geringen Anzahl von Kennzeichenbits innerhabl eines PCM-Rahmens anzugeben.

Ausgehend vom einleitend beschriebenen Verfahren, wird die Aufgabe durch folgende merkmale gelöst :

a) Zur PCM-Übertragung werden bei unterschiedlichen Arten der Schleifenzeichengabe und bei Signalisierung von Zählimpulsen über die p-Ader zwei Kennzeichenbits verwendet,

b) Die Leitungszustände Massepotential « $\perp$ », Minuspotential « $-$ », Pluspotential « $+$ », aufgetrennte Leitung « $\infty$ » auf den ankommenden a, b, p-Adern werden im belegten Zustand in folgende Kombinationen der Kennzeichenbits umgesetzt :

$a_1$-Ader « $\perp$ » und $b_1$-Ader « $-$ » : $a_r = 0$, $b_r = 1$
$a_1$-Ader « $-$ » und $b_1$-Ader « $\perp$ » : $a_r = 1$, $b_r = 1$
$a_1$-Ader « $\infty$ » und $b_1$-Ader « $\infty$ » : $a_r = 0$, $b_r = 0$
$p_1$-Ader « $\perp$ » : $a_r$, $b_r$ unverändert
$p_1$-Ader « $+$ » : $a_r$ invertiert,
$b_r$ unverändert.

Vorteilhaft bei dieser Lösung ist es, daß nur zwei Kennzeichenbits zur Übertragung der gebräuchlichsten Leitungszustände, d. h. der Schleifenzustände und der Zählimpulse, benötigt werden.

Es ist weiterhin vorteilhaft, daß bei Fernsprechsystemen ohne die Variante der Zeichengabe über aufgetrennte Leitung « $a = \infty$, $b = \infty$ » nur das Kennzeichenbit « $a_r$ » zur PCM-Übertragung verwendet wird.

In diesem Fall wird zur Signalisierung der Schleifenzustände und der Zählimpulse nur ein einziges Bit benötigt.

Es ist zweckmäßig, daß nach einem Wechsel von Minuspotential « $-$ » auf Massepotential « $\perp$ » auf der ankommenden a-Ader und von Massepotential « $\perp$ » auf Minuspotential auf der ankommenden b-Ader die Signalisierung von der ankommenden p-Ader noch für eine Zeit t1 größer als eine Zählimpulsdauer gesperrt ist.

Durch diese Maßnahmen bleibt die Änderung des Leitungszustandes unbeeinflußt von einem ggf. eintreffenden ersten Meldezählimpuls auf der ankommenden p-Ader.

Es ist ferner vorteilhaft, daß bei jedem Wechsel des empfangenen ersten Kennzeichenbits von der logischen 1 auf die logische 0 ein Zählimpuls auf der abgehenden p-Ader erzeugt wird.

Da alle Zählimpulse als Wechsel des ersten Kennzeichenbits $a_r$ übertragen werden, braucht nur der Wechsel von 1 auf 0 des ersten Kennzeichenbits $a_r$ ausgewertet werden.

Es ist weiterhin vorteilhaft, daß empfangsseitig wahlweise eine Signalisierung der Zählimpulse über die abgehenden a, b-Adern oder die abgehende p-Ader erfolgt.

Hierdurch ist empfangsseitig eine Anpassung an die verschiedenen Arten der Leitungssignalisierung möglich.

Weitere vorteilhafte Ausbildungen der Erfindung sind in den übrigen Unteransprüchen angegeben.

Die Erfindung wird an Hand eines Ausführungsbeispiels näher erläutert.

Es zeigen

Figur 1 die gebräuchlichen Signalisierungsverfahren und deren erfindungsgemäße Umsetzung,

Figur 2 ein Prinzipschaltbild mit einem ersten Kennzeichenumsetzer SCI und einem zweiten Kennzeichenumsetzer SCO.

Figur 3 ein Zeitdiagramm zur Erläuterung der Funktion des zweiten Kennzeichenumsetzers SCO.

Das Grundprinzip der Zeichenübermittlung, d. h. der Übermittlung der Leitungszustände — auch

2

Schleifenzeichengabe genannt — über die Sprechadern a, b eines Fernsprechsystems leitet sich aus den beiden Zuständen am Teilnehmerapparat — Hörer aufgelegt oder Hörer abgenommen — ab. Für das Schleifensystem sind dabei dem rufenden Teilnehmer die Zustände : Schleifenwiderstand zwischen a, b-Adern hoch- oder niederohmig zugeordnet. Dem gerufenen Teilnehmer sind die Zustände Minuspotential « − » an der a-Ader und Massepotential « ⊥ » an der b-Ader oder umgekehrt zugeordnet. Eine Erweiterung dieses Signalisierungsprinzips ist auf vielfältige Arten für die Übermittlung von Zählimpulsen gebräuchlich. So ist es bekannt durch kurzzeitige Änderung der Leitungszustände Zählimpulse zu übertragen. Als Leitungszustand wird beispielsweise das Potential « ⊥ » oder « − » auf den Adern einer Leitung bezeichnet. Bei der Erfindung wird nur der belegte Zustand betrachtet.

Die gebräuchlichsten Fälle der Zählzeichengabe sind :

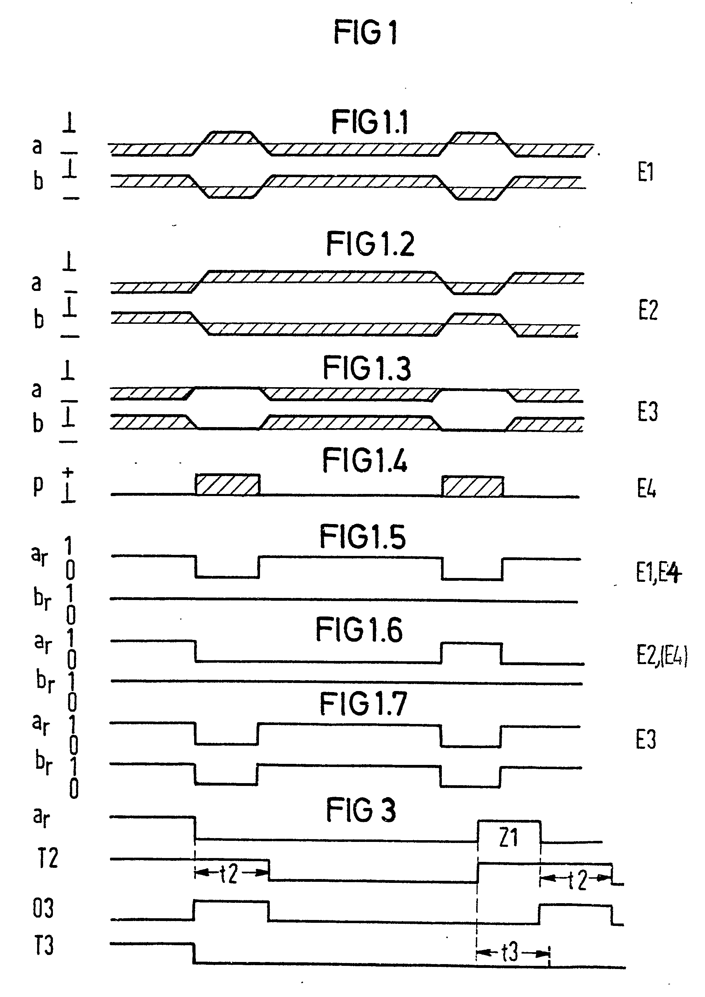

E1) kurzzeitiges Umpolen der Potentiale der a-, b-Adern von der Normalpolarität (Fig. 1.1). Die normale Polarität ist Minuspotential « − » an der a-Ader und Massepotential « ⊥ » an der b-Ader.

E2) Kurzzeitiges Rückpolen von der umgekehrten Polarität im Gesprächszustand (Fig. 1.2).

E3) Kurzzeitiges Wegnehmen der Speisung (Auftrennen « ∞ ») von den beiden Adern für die Dauer des Zählimpulses (Fig. 1.3).

E4) Die Übermittlung der Zählimpulse über eine gesonderte dritte Ader (p-Ader, Fig. 1.4).

E2, E4) Die Umpolung der Polaritäten des Leitungszustands zu Gesprächsbeginn wird mit der Übertragung der Zählimpulse über die p-Ader kombiniert.

Während in den ersten drei Fällen der Polaritätswechsel mit abgeflachten Impulsflanken erforderlich ist, um ein Zählgeräusch zu vermeiden, sind solche Maßnahmen bei der Übertragung der Zählimpulse über die p-Ader — Fall E4 bzw. E2, E4 — nicht notwendig, da in der Gesprächsphase kein Polaritätswechsel stattfindet. Für die Übertragung von Leitungszuständen über PCM-Strecken stehen im allgemeinen in jeder Richtung vier Kennzeichenbits zur Verfügung. Dieses Verfahren benötigt nur zwei Kennzeichenbits zur Übertragung der Leitungszustände (Schleifenzustände und Zählimpulse). Dies wird dadurch erreicht, daß alle Zählimpulse für die Fälle E1, E2 und E4 als Änderung des ersten Kennzeichenbits $a_r$ übertragen werden (Fig. 1.5 ; Fig. 1.6). Nur beim Fall E3 (Fig. 1.3) ist die Änderung des zweiten Kennzeichenbits $b_r$ erforderlich (Fig. 1.7).

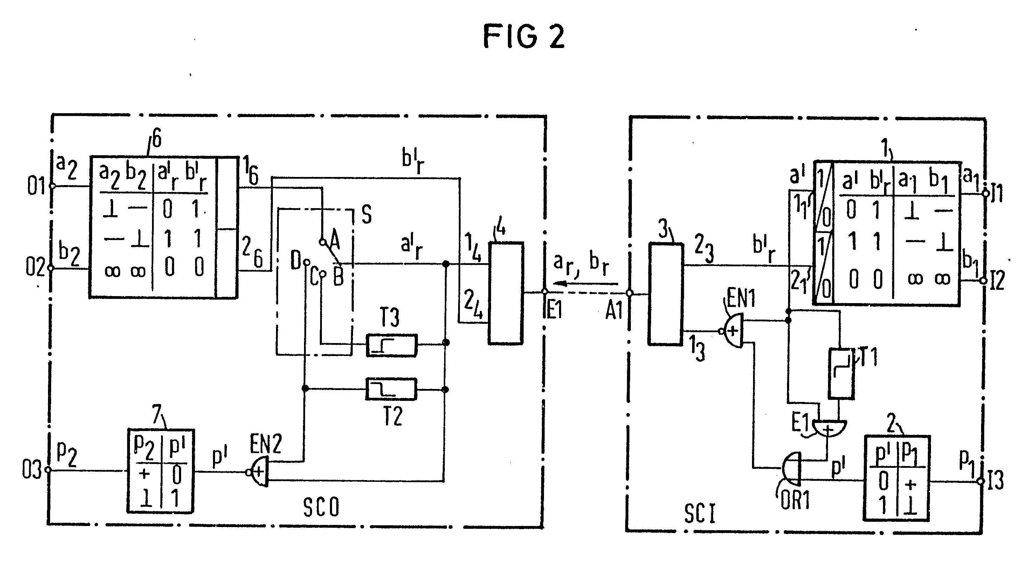

In Fig. 2 ist als Schaltungsbeispiel ein erster und zweiter Kennzeichenumsetzer angegeben. Es wurden nur die Schaltungskomponenten für die Ruckwärtsrichtung vom gerufenen zum rufenden Teilnehmer dargestellt und es soll auch nur die Übertragung der beiden Kennzeichenbits $a_r$, $b_r$ vom gerufenen zum rufenden Teilnehmer betrachtet werden. Die Übertragungsrichtung erfolgt vom ersten Kennzeichenumsetzer SCI (Signaling Converter Incoming), der dem gerufenen Teilnehmer zugeordnet ist, zu einem zweiten Kennzeichenumsetzer SCO (Signaling Converter Outgoing), der dem rufenden Teilnehmer zugeordnet ist. Der erste Kennzeichenumsetzer SCI enthält eine erste Auswerteschaltung 1 an deren Eingang I1 und I2 die dem gerufenen Teilnehmer zugeordnete Leitung $a_1$, $b_1$ angeschaltet ist. Die erste Auswerteschaltung 1 setzt die am Eingang anliegenden Gleichstromzeichen in digitale Signale um. Der erste Ausgang $1_1$ der ersten Auswerteschaltung 1 ist mit einem ersten Eingang eines ersten Exclusiv-NOR-Gatters EN1 verbunden, dessen Ausgang mit dem ersten Eingang $1_3$ einer ersten Digital-Schnittstelle 3 verbunden ist. Außerdem ist der erste Ausgang $1_1$ mit dem ersten Eingang eines ersten Exclusive-OR-Gatters und über ein erstes Zeitglied T1 mit dem zweiten Eingang dieses ersten Exclusive-OR-Gatters E1 verbunden. Der Ausgang des ersten Exclusive-OR-Gatters E1 ist mit einem zweiten Eingang eines ODER-Gatters OR1 verbunden, dessen Ausgang mit einem zweiten Eingang des ersten Exclusive-NOR-Gatters EN1 verbunden ist. Über einen dritten Eingang 13 des ersten Kennzeichenumsetzers SCI kann eine weitere Ader $p_1$ angeschaltet werden. Eine zweite Auswerteschaltung 2 setzt das anliegende Gleichstromzeichen in ein digitales Signal um. Ein am Eingang anliegendes positives Potential wird als « logische 0 » ausgewertet. Der Ausgang der zweiten Auswerteschaltung ist mit dem ersten Eingang des ODER-Gatters OR1 verbunden. Ein zweiter Ausgang $2_1$ der ersten Auswerteschaltung 1 ist direkt mit einem zweiten Eingang $2_3$ der ersten digitalen Schnittstelle 3 verbunden. Der Ausgang der ersten digitalen Schnittstelle ist mit A1 bezeichnet. Über diesen Ausgang wird das PCM-Signal, und innerhalb dieses PCM-Signals die Kennzeichenbits $a_r$, $b_r$ zum zweiten Kennzeichenumsetzer SCO, der dem rufenden Teilnehmer zugeordnet ist, übertragen. Der Eingang des zweiten Kennzeichenumsetzers SCO ist mit E1 bezeichnet. Dies ist gleichzeitig der Eingang der zweiten Digitalschnittstelle 4, an deren ersten Ausgang $1_4$ das $a_r$-Bit als Zustand $a'_r$ ausgegeben wird. An einem zweiten Ausgang $2_4$ dieser Digitalschnittstelle liegt das $b_r$-Bit als Zustand $b'_r$ an. Der zweite Ausgang $2_4$ ist direkt mit einem zweiten Eingang $2_6$ eines ersten Umsetzers 6 verbunden, der die logischen Eingangszustände wieder in Gleichstromzeichen an seinen Ausgängen 01 und 02 umsetzt. Der erste Ausgang $1_4$ der zweiten Digitalschnittstelle 4 ist auf einen Anschlußpunkt B eines Schalters S geführt und kann über den am Schaltungspunkt A angeschlossenen Umschaltkontakt mit einem ersten Eigang $1_6$ des ersten Umsetzers 6 verbunden werden. Außerdem ist der erste Ausgang $1_4$ der zweiten Digtialschnittstelle 4 auf einen ersten Eingang eines zweiten Exclusive-NOR-Gatters EN2 geführt und über ein zweites Zeitglied T2, das eine Verzögerungszeit t2 größer als die Zählimpulsdauer für den Übergang von der « logischen 1 » auf die « logische 0 » und keine Zeitverzögerung für den Übergang von der « logischen 0 » auf die « logische 1 » besitzt, verbunden. Der Ausgang des zweiten Exclusive-NOR-Gatters EN2 ist mit dem Eingang eines zweiten Umsetzers 7 verbunden, der die logischen Signale am Eingang wieder in Gleichstromzeichen am Ausgang 03 umsetzt. Der Ausgang des zweiten Zeitgliedes T2 ist außerdem auf einen Anschlußpunkt D des Schalters S geführt und kann mit dem Anschlußpunkt A verbunden werden. Es ist noch ein drittes Zeitglied T3 an den ersten Ausgang 1 der zweiten Digitalschnittstelle 4 angeschaltet, das eine Verzögerungszeit t3 größer als die Zählimpulsdauer für den Übergang der « logischen 0 » auf die « logische 1 » besitzt und keine Verzögerungsdauer für den Übergang von der « logischen 1 » auf die « logische 0 ». Der Ausgang dieses Zeitgliedes ist auf einen Anschlußpunkt C des Schalters S geführt.

Die an den Eingängen I1 und I2 des ersten Kennzeichenumsetzers SCI anliegenden Gleichstromzeichen werden entsprechend der Tabelle 1 in logische Signale umgesetzt.

| Tabelle 1 | | | | | Tabelle 2 | | |
|---|---|---|---|---|---|---|---|
| $a_1$ | $b_1$ | | $a'$ | $b'_r$ | | p1 | p' |
| $\perp$ | $-$ | | 0 | 1 | | + | 0 |
| $-$ | $\perp$ | | 1 | 1 | | $\perp$ | 1 |
| $\infty$ | $\infty$ | | 0 | 0 | | | |

Nur wenn beide Eingangssignale das erforderliche Potential liefern, wird das logische Ausgangssignal geändert. Liegt am Eingang I1, an diesem ist die dem gerufenen Teilnehmer zugeordnete $a_1$-Ader angeschlossen, Masse « $\perp$ » an und am Eingang I2, an diesem ist die dem gerufenen Teilnehmer zugeordnete $b_1$-Ader angeschlossen, negatives Potential « $-$ » an, so wird am Ausgang $1_1$ die « logische 0 » und am Ausgang $2_1$ die « logische 1 » abgegeben. Ändert sich jetzt der Zustand an dem Eingang I1 von Masse auf Minuspotential und auch der Zustand am Eingang I2 von Minuspotential auf Massepotential, so wird am Ausgang $1_1$ der Zustand entsprechend der Tabelle 1 auf die « logische 1 » geändert. Eine entsprechende Schaltungsanordnung enthält beispielsweise UND-Gatter, über die die entsprechenden Funktionen zusammengefaßt werden, um dann über jeweils eine RS-Kippstufe an die Ausgänge $1_1$ und $2_1$ weitergegeben zu werden. Die Auswertung der Gleichstromzeichen erfolgt über übliche Schmitt-Trigger bzw. bei Fall E3 über Messung des Schleifenstromes. Die am Ausgang der ersten Auswerteschaltung abgegebenen Signale $a'$ und $b'_r$ gelangen zu den Eingängen $1_3$, $2_3$ der ersten Digitalschnittstelle 3. Hier werden sie in den Kennzeichen-Pusrahmen eines PCM-Pulsrahmens eingefügt und ausgesendet. Eine Änderung der Leitungszustände an den Eingängen I1 und I2 bewirkt für die entsprechende Zeitdauer eine Änderung des Zustandes der entsprechenden Bits $a_r$ und $b_r$ des Kennzeichenpulsrahmens. Werden die Zählimpulse über eine dritte Ader, die $p_1$-Ader übertragen, so erfolgt über die zweite Auswerteschaltung 2 (Tabelle 2), das ODER-Gatter OR1 und das erste Exclusive-NOR-Gatter EN1 jeweils eine Änderung des ausgesendeten Kennzeichenbits $a_r$ (Fig. 1.5 ; 1.6). Das erste Zeitglied T1 verhindert, daß unmittelbar nach einem Wechsel am Ausgang $1_1$ der ersten Auswerteschaltung ein Zählimpuls auf der $p_1$-Ader das Kennzeichenbit $a_r$ sogleich wieder rücksetzt. Das erste Verzögerungsglied T1 weist nur für den Übergang der « logischen 1 » auf die « logische 0 » eine Verzögerungszeit t1 auf, die länger als ein Zählimpuls ist. Die Kennzeichenbits $a_r$ und $b_r$ werden über die PCM-Strecke übertragen und gelangen zu dem Eingang E1 des zweiten Kennzeichenumsetzers SCO.

In der zweiten Digitalschnittstelle 4 wird das PCM-Signal ausgewertet und die Kennzeichenbits als Zustände $a'_r$, $b'_r$ an den Ausgängen $1_4$ und $2_4$ abgegeben.

Im gebräuchlichsten Anwendungsfall sind die Punkte A und B des Schalters S miteinander verbunden. Hierdurch gelangen die Kennzeichenbits $a_r$ und $b_r$ als Zustände $a'_r$, $b'_r$ unmittelbar zum ersten Umsetzer 6. Der erste Umsetzer 6 weist eine der ersten Auswerteschaltung 6 entsprechende Funktion auf. Die an den Eingängen $1_6$, $2_6$ anliegenden logischen Zustände werden wieder in Gleichstromzeichen umgesetzt und auf die an den Ausgängen 01 und 02 angeschlossenen und dem rufenden Teilnehmer zugeordneten Adern $a_2$, $b_2$ geschaltet. Damit sind die Leitungszustände auf den $a_2$, $b_2$-Adern dieselben wie auf den $a_1$, $b_1$-Adern.

Mit Hilfe des zweiten Zeitgliedes T2 und des zweiten Exclusive-NOR-Gatters EN2 wird bei jedem Übergang am ersten Ausgang $1_4$ der zweiten Digitalschnittstelle 4 von der « logischen 1 » zur « logischen 0 » ein Impuls p' gewonnen, der nach der Umsetzung in ein Gleichstromsignal in dem zweiten Umsetzer 7, der umgekehrt zur zweiten Auswerteschaltung 2 arbeitet, am Ausgang 03 als Zählimpuls abgegeben wird. Im eben beschriebenen Beispiel wurde angenommen, daß die Zählimpulse über die $a_1$, $b_1$-Adern signalisiert wurden. Beim zweiten Kennzeichenumsetzer SCO kann eine Signalisierung sowohl über die $a_2$, $b_2$-Adern als auch über die $p_2$-Ader erfolgen. In der Schalterstellung AD wird die Signalisierung der Zählimpulse über die $a_2$, $b_2$-Adern unterbunden. In der Schalterstellung AC wird nur das Umplen auf den $a_1$, $b_1$-Adern zum Zwecke der Signalisierung des Zustandes « Hörer abgehoben » (E2, Fig. 1.2) ohne Zeitverzögerung über die $a_2$, $b_2$-Adern signalisiert, während die Zählimpulse ausschließlich über die $p_2$-Ader signalisiert werden.

In Fig. 3 ist ein Zeitdiagramm für die Fälle E1, E2 oder E4 der Signalisierung beim zweiten Kennzeichenumsetzer SCO dargestellt. Das Zeitglied T2 verzögert nur bei den Übergängen von der « logischen 1 » auf die « logische 0 » und bildet so über das Exclusive-NOR-Gatter EN2 den Zählimpuls am Ausgang 03. Da das Zeitglied T3 alle Übergänge von der « logischen 0 » auf die « logische 1 »

4

verzögert, wird der Zählimpuls Z1 und alle weiteren Zählimpulse für den ersten Umsetzer 6 unterdrückt. Am Eingang $1_6$ des ersten Umsetzers 6 liegt somit nur die Signalisierung des Zustandes « Hörer abgenommen » an.

Die Signalisierung von Zählimpulsen über die $a_2$, $b_2$-Adern kann auch dadurch unterbunden werden, indem zwischen dem Ausgang $1_4$ der zweiten Digitalschnittstelle 4 und dem Eingang $1_6$ des ersten Umsetzers 6 eine einfache Schaltung eingefügt wird, die nur Zustandsänderungen druchläßt, die eine vorgegebene Zeitdauer überschreiten. Diese Schaltungsanordnung besteht beispielsweise aus einem Schieberegister, an dessen Ausgang eine weitere Kippstufe angeschaltet ist. Die Frequenz des an den Takteingängen des Schieberegisters und der nachgeschalteten Kippstufe anliegenden Taktes und die Anzahl der Kippstufen bestimmen die Verzögerungsdauer. Solange nun Eingangssignal und Ausgangssignal des Schieberegisters nicht den gleichen logischen Zustand aufweisen, wird der Takt für die nachgeschaltete Kippstufe gesperrt. Durch diese einfache Anordnung braucht keine Fallunterscheidung bei Signalisierung über die $p_2$-Ader erfolgen.

Die Übertragung von Kennzeichenbits in der Vorwätsrichtung erfolgt entsprechend in der bereits beschriebenen Weise. Selbstverständlichkeiten, wie z. B. die Zusammenfassung der abgehenden und der ankommenden a, b-Adern zu einer echten Zweidrahtverbindung wurden aus Gründen der Übersichtlichkeit nicht dargestellt.

**Ansprüche**

1. Verfahren zur PCM-Übertragung von Schleifenzuständen und Zählimpulsen für Fernsprechsysteme durch Umsetzung der Leitungszustände auf den a, b, p-Adern in Kennzeichenbits, die an einer vorbestimmten Stelle eines Kennzeichen-Pulsrahmens in einen PCM-Pulsrahmen eingefügt werden und nach der PCM-Übertragung wieder in die entsprechenden Leitungszustände umgesetzt werden, gekennzeichnet durch folgende Merkmale :

a) Zur PCM-Übertragung werden bei unterschiedlichen Arten der Schleifenzeichengabe und bei Signalisierung von Zählimpulsen über die p-Ader zwei Kennzeichenbits ($a_r$, $b_r$) verwendet,

b) Die Leitungszustände Massepotential « $\perp$ », Minuspotential « $-$ », Pluspotential « $+$ », aufgetrennte Leitung « $\infty$ » auf den ankommenden a, b, p-Adern ($a_1$, $b_1$, $p_1$) werden im belegten Zustand in folgende Kombinationen der Kennzeichenbits ($a_r$, $b_r$) umgesetzt :

$a_1$-Ader « $\perp$ » und $b_1$-Ader « $-$ » : $a_r = 0$, $b_r = 1$
$a_1$-Ader « $-$ » und $b_1$-Ader « $\perp$ » : $a_r = 1$, $b_r = 1$
$a_1$-Ader « $\infty$ » und $b_1$-Ader « $\infty$ » : $a_r = 0$, $b_r = 0$
$p_1$-Ader « $\perp$ »                    : $a_r$, $b_r$ unverändert
$p_1$-Ader « $+$ »                    : $a_r$ invertiert,
                                     $b_r$ unverändert.

2. Verfahren nach Anspruch 1, dadurch gekennzeichnet, daß bei Fernsprechsystemen ohne die Variante der Schleifenzeichengabe über aufgetrennte Leitungen « $a = \infty$, $b = \infty$ » nur das Kennzeichenbit « $a_r$ » zur PCM-Übertragung verwendet wird.

3. Verfahren nach Anspruch 1 oder 2, dadurch gekennzeichnet, daß nach einem Wechsel von Minuspotential « $-$ » auf Massepotential « $\perp$ » auf der ankommenden a-Ader ($a_1$) und von Massepotential « $\perp$ » auf Minuspotential « $-$ » auf der ankommenden b-Ader ($b_1$) die Signalisierung von der ankommenden p-Ader ($p_1$) für eine Zeit t1 größer als eine Zählimpulsdauer gesperrt ist.

4. Verfahren nach einem der Ansprüche 1 bis 3, dadurch gekennzeichnet, daß bei jedem Wechsel des empfangenen ersten Kennzeichenbits ($a_r$) von der logischen 1 auf die logische 0 ein Zählimpuls auf der abgehenden p-Ader ($p_2$) erzeugt wird.

5. Verfahren nach Anspruch 1 bis 4, dadurch gekennzeichnet, daß komplementäre Zustände für das erste Kennzeichenbit ($a_r$) und/oder das zweite Kennzeichenbit ($b_r$) verwendet werden.

6. Verfahren nach einem der vorhergehenden Ansprüche, dadurch gekennzeichnet, daß empfangsseitig wahlweise eine Signalisierung der Zählimpulse über die abgehenden a, b-Adern ($a_2$, $b_2$) oder die abgehende p-Ader ($p_2$) erfolgt.

7. Schaltungsanordnung zur Durchführung des Verfahrens mit einem ersten Kennzeichenumsetzer (SCI) nach einem des Ansprüche 1 bis 6, dadurch gekennzeichnet, daß die ankommenden a, b-Adern ($a_1$, $b_1$) an eine erste Auswerteschaltung (1) angeschaltet sind, die die Leitungszustände in binäre Ausgangssignale ($a'_r$, $b'_r$) an ihren zwei Ausgängen ($1_1$, $2_1$) umsetzt, daß der erste Ausgang ($1_1$) der ersten Auswerteschaltung (1) über einen ersten Eingang eines ersten Exclusive NOR-Gatters (EN1) mit einem ersten Eingang ($1_3$) einer ersten Digitalschnittstelle (3) verbunden ist, die das Einfügen der am Eingang anliegenden Kennzeichenbits in einen Kennzeichen-Pulsrahmen besorgt, daß der zweite Ausgang ($2_1$) der ersten Auswerteschaltung (1) mit einem zweiten Eingang ($2_3$) der ersten Digitalschnittstelle verbunden ist und daß eine zweite Auswerteschaltung (2) vorgesehen ist, deren Eingang an die ankommende p-Leitung ($p_1$) angeschaltet ist und deren Ausgang mit dem zweiten Eingang des ersten Exclusive-NOR-Gatters (EN1) verbunden ist.

8. Schaltungsanordnung nach Anspruch 7, dadurch gekennzeichnet, daß ein erster Eingang eines ersten Exclusive-OR-Gatters (E1) an den ersten Ausgang ($1_1$) der ersten Auswerteschaltung (1) angeschaltet ist, daß ein zweiter Eingang des ersten Exclusive-OR-Gatters (E1) über ein erstes Zeitglied T1 mit einer Verzögerungszeit t1 > eine Zählimpulsdauer für den Übergang von der logischen 1 auf die logische 0 ebenfalls an den ersten Ausgang ($1_1$) der ersten Auswerteschaltung (1) angeschaltet ist, daß zwischen dem Ausgang der zweiten Auswerteschaltung (2) und dem zweiten Eingang des ersten Exclusive-NOR-Gatters (EN1) ein ODER-Gatter (OR1) geschaltet ist und daß ein zweiter Eingang des ODER-Gatters (OR1) mit dem Ausgang des ersten Exclusive-OR-Gatter (E1) verbunden ist.

9. Schaltungsanordnung für einen zweiten Kennzeichenumsetzer (SCO) zur Durchführung des Verfahrens nach einem der Ansprüche 1 bis 7, dadurch gekennzeichnet, daß eine zweite Digitalschnittstelle (4) vorgesehen ist, die an ihren Ausgängen ($1_4$, $2_4$) die Kennzeichenbits ($a_r$, $b_r$) als Zustände ($a'_r$, $b'_r$) abgibt, daß die Ausgänge ($1_4$, $2_4$) der zweiten Digitalschnittstelle (4) mit den Eingängen ($1_6$, $2_6$) eines ersten Umsetzers (6) verbunden sind, der eine der ersten Auswerteschaltung (1) entsprechende Umsetzung der Kennzeichenbits in Leitungszustände aufweist, daß am ersten Ausgang ($1_4$) der zweiten Digitalschnittstelle (4) der erste Eingang eines zweiten Exclusive-NOR-Gatters (EN2) und dessen zweiter Eingang über ein zweites Laufzeitglied (T2) angeschaltet sind, das eine Zeitverzögerung von t2 größer als eine Zählimpulsdauer aufweist, und daß der Ausgang des zweiten Exclusive-NOR-Gatters mit dem Eingang eines zweiten Umsetzers (7) verbunden ist, der Zählimpulse an die abgehende p-Ader ($p_2$) abgibt.

10. Schaltungsanordnung nach einem der vorhergehenden Ansprüche, dadurch gekennzeichnet, daß der erste Eingang ($1_6$) des ersten Umsetzers (6) über ein drittes Zeitglied (T3), das für den Übergang von der logischen 0 auf die logische 1 eine Verzögerungszeit t3 größer als eine Zählimpulsdauer aufweist, angeschaltet ist.

11. Schaltungsanordnung nach einem der Ansprüche 8, 9, 10, dadurch gekennzeichnet, daß ein Schalter (S) vorgesehen ist, der den Eingang ($1_6$) des ersten Umsetzers (6) wahlweise mit dem Ausgang des zweiten Zeitgliedes (T2), des dritten Zeitgliedes (T3) oder dem ersten Ausgang ($1_4$) der zweiten Digitalschnittstelle (4) verbindet.

12. Schaltungsanordnung nach Anspruch 8, dadurch gekennzeichnet, daß zwischen dem ersten Ausgang ($1_4$) der zweiten Digitalschnittstelle (4) und dem ersten Eingang ($1_6$) des ersten Umsetzers eine Schaltungsanordnung mit Tiefpaßwirkung eingeschaltet ist, die nur Zustandsänderungen an ihrem Ausgang weitergibt, deren Zeitdauer länger als ein Zählimpuls ist.

## Claims

1. Method for the PCM transmission of loop states and counting pulses for telephone systems by converting the line conditions on the a, b, p-wires into characteristic bits, which are inserted into a PCM pulse frame at a predetermined point of a character pulse frame and re-converted into the corresponding line conditions after the PCM transmission, characterised by the following features :

a) two characteristic bits ($a_r$, $b_r$) are used for the PCM transmission in the case of different types of the loop signalling and in the case of the signalling of counting pulses via the p-wire,

b) in the engaged state the line conditions earth potential « $\perp$ », minus potential « $-$ », plus potential « $+$ », interrupted line « $\infty$ » on the incoming a, b, p-wires ($a_1$, $b_1$, $p_1$) are converted into the following combinations of the characteristic bits ($a_r$, $b_r$) :

$a_1$-wire « $\perp$ » and $b_1$-wire « $-$ » : $a_r = 0$, $b_r = 1$
$a_1$-wire « $-$ » and $b_1$-wire « $\perp$ » : $a_r = 1$, $b_r = 1$
$a_1$-wire « $\infty$ » and $b_1$-wire « $\infty$ » : $a_r = 0$, $b_r = 0$
$p_1$-wire « $\perp$ »               : $a_r = br$ unchanged
$p_1$-wire « $+$ »               : $a_r$ inverted,
                                      $b_r$ unchanged.

2. Methods as claimed in claim 1, characterised in that in telephone systems without the variant of the loop signalling via interrupted lines « $a = \infty$, $b = \infty$ », only characteristic bit « $a_r$ » is used for the PCM transmission.

3. Method as claimed in claim 1 or 2, characterised in that following a change from minus potential « $-$ » to earth potential « $\perp$ » on the incoming a-wire ($a_1$) and from earth potential « $\perp$ » to minus potential « $-$ » on the incominb b-wire ($b_1$), the signalling from the incoming p-wire ($p_1$) is blocked for a time t1 greater than one counting pulse duration.

4. Method as claimed in one of claims 1 to 3, characterised in that in each change of the received first characteristic bit ($a_r$) from the logic 1 to the logic 0, a counting pulse is produced on the outgoing p-wire ($p_2$).

5. Method as claimed in claims 1 to 4, characterised in that complementary states are used for the first characteristic bit ($a_r$) and/or the second characteristic bit ($b_r$).

6. Method as claimed in one of the preceding claims, characterised in that at the receiving end, a

6

signalling of the counting pulses is alternatively effected via the outgoing a, b-wires ($a_2$, $b_2$) or the outgoing p-wire ($p_2$).

7. Circuit arrangement for carrying out the method with a first character converter (SCI) as claimed in one of claims 1 to 6, characterised in that the incoming a, b-wires ($a_1$, $b_1$) are connected to a first evaluating circuit (1) which converts the line conditions into binary output signals (a', $b'_r$) at its two outputs ($1_1$, $2_1$), that the first output ($1_1$) of the first evaluating circuit (1) is connected via a first input of a first exclusive NOR-gate (EN1) to a first input ($1_3$) of a first digital interface (3) which carries out the insertion of the characteristic bits connected to the input into a character pulse frame, that the second output ($2_1$) of the first evaluating circuit (1) is connected to a second input ($2_3$) of the first digital interface, and that there is provided a second evaluating circuit (2) whose input is connected to the incoming p-line ($p_1$) and whose output is connected to the second input of the first exclusive NOR-gate (EN1).

8. Circuit arrangement as claimed in claim 7, characterised in that a first input of a first exclusive OR-gate (E1) is connected to the first output ($1_1$) of the first evaluating circuit (1), that for the transition from the logic 1 to the logic 0 a second input of the first exclusive OR-gate (E1) is likewise connected to the first output (1) of the first evaluating circuit (1) by means of a first time element T1 with a delay time t1 > one counting pulse duration, that an OR-gate (OR1) is switched between the output of the second evaluating circuit (2) and the second input of the first exclusive NOR-gate (EN1), and that a second input of the OR-gate (OR1) is connected to the output of the first exclusive OR-gate (E1).

9. Circuit arrangement for a second character converter (SCO) for implementing the method as claimed in one of claims 1 to 7, characterised in that there is provided a second digital interface (4) which at its outputs ($1_4$, $2_4$) emits the characteristic bits ($a_r$, $b_r$) as states ($a'_r$, $b'_r$), that the outputs ($1_4$, $2_4$) of the second digital interface (4) are connected to the input ($1_6$, $2_6$) of a first converter (6) which presents a conversion of the characteristic bits into line conditions suitable for the first evaluating circuit (1), that the first input of a second exclusive NOR-gate (EN2) is connected to the first output ($1_4$) of the second digital interface (4) and the second input of the second exclusive NOR-gate (EN2) is connected via a second transit time element (T2) having a time delay of t2 greater than a counting pulse duration, and that the output of the second exclusive NOR-gate is connected to the input of a second converter (7) which emits the counting pulses to the outgoing p-wire ($p_2$).

10. Circuit arrangement as claimed in one of the preceding claims, characterised in that the first input ($1_6$) of the first converter (6) is connected via a third time element (T3), which has a delay time t3 greater than a counting pulse duration, for the transition from the logic 0 to the logic 1.

11. Circuit arrangement as claimed in one of claims 8, 9, 10, characterised in that there is provided a switch (S) which alternatively connects the input ($1_6$) of the first converter (6) to the output of the second time element (T2), of the third time element (T3) or to the first output ($1_4$) of the second digital interface (4).

12. Circuit arrangement as claimed in claim 8, characterised in that between the first output ($1_4$) of the second digital interface (4) and the first input ($1_6$) of the first converter, there is interposed a circuit arrangement which has a low-pass filter effect and which only transmits to its output changes of state whose time duration is longer than a counting pulse.

## Revendications

1. Procédé de transmission MIC d'états de boucle et d'impulsions de comptage pour des systèmes téléphoniques par conversion des états de ligne dans les conducteurs a, b, p en bits d'identification, qui sont insérés en un emplacement prédéterminé d'une trame d'impulsions d'identification dans une trame d'impulsions MIC et sont à nouveau transformés, après la transmission MIC, en les états de lignes correspondants, caractérisé par les caractéristiques suivantes :

a) Pour la transmission MIC on utilise deux bits d'identification ($a_r$, $b_r$) dans le cas de différents types de délivrance de signaux de boucle et dans le cas de la signalisation d'impulsions de comptage par l'intermédiaire du conducteur p,

b) les états de ligne potentiel de masse « ⊥ », potentiel moins « − », potentiel plus « + », ligne déconnectée « ∞ » intervenant dans les conducteurs a, b, p d'arrivée ($a_1$, $b_1$, $p_1$) sont convertis, à l'état occupé, en les combinaisons suivantes des bits d'identification ($a_r$, $b_r$) :

conducteur $a_1$ « ⊥ » et conducteur $b_1$ « − » : $a_r = 0$, $b_r = 1$
conducteur $a_1$ « − » et conducteur $b_1$ « ⊥ » : $a_r = 1$, $b_r = 1$
conducteur $a_1$ « ∞ » et conducteur $b_1$ « ∞ » : $a_r = 0$, $b_r = 0$
conducteur $p_1$ « ⊥ »                        : $a_r$, $b_r$, inchangés
conducteur $p_1$ « + »                        : $a_r$ inversé,
                                                $b_r$ inchangé.

2. Procédé suivant la revendication 1, caractérisé par le fait que dans le cas de systèmes téléphoniques sans la variante de la délivrance de signaux de boucle dans des lignes déconnectées « a = ∞, b = ∞ », on n'utilise que le bit d'identification « $a_r$ » pour la transmission MIC.

**0 062 701**

3. Procédé suivant la revendication 1 ou 2, caractérisé par le fait qu'après une permutation du potentiel moins « − » au potentiel de masse « ⊥ » dans le conducteur a d'arrivée « $a_1$ » et du potentiel de masse « ⊥ » au potentiel moins « − » dans le conducteur b d'arrivée ($b_1$), la signalisation du conducteur p d'arrivée ($p_1$) est bloquée pendant une durée $t_1$ supérieure à la durée d'une impulsion de comptage.

4. Procédé suivant l'une des revendications 1 à 3, caractérisé par le fait que lors de chaque passage du premier bit d'identification reçu ($a_r$) du 1 logique au 0 logique, une impulsion de comptage est produite dans le conducteur p de départ ($p_2$).

5. Procédé suivant les revendications 1 à 4, caractérisé par le fait qu'on utilise des états complémentaires pour le premier bit d'identification ($a_r$) et/ou pour le second bit d'identification ($b_r$).

6. Procédé suivant l'une des revendications précédentes, caractérisé par le fait que du côté réception il se produit au choix une utilisation des impulsions de comptage par l'intermédiaire des conducteurs a, b, de départ ($a_2$, $b_2$) ou du conducteur p de départ ($p_2$).

7. Montage pour la mise en œuvre du procédé avec un premier convertisseur de caractères d'identification (SCI) selon l'une des revendications 1 à 6, caractérisé par le fait que les conducteurs a, b d'arrivée ($a_1$, $b_1$) sont raccordés à un premier circuit d'exploitation (1), qui convertit les états de ligne en signaux de sortie binaires ($a'_r$, $b'_r$) sur ses deux sorties ($1_1$, $2_1$), que la première sortie ($1_1$) du premier circuit d'exploitation (1) est reliée par l'intermédiaire d'une première entrée d'un premier circuit NON-OU-Exclusif (NE1) à une première entrée ($1_3$) d'une première interface numérique (3), qui assure l'insertion des bits d'identification, présents à l'entrée, dans une trame d'impulsions d'identification, que la seconde sortie ($2_1$) du premier circuit d'exploitation (1) est reliée à une seconde entrée ($2_3$) de la première interface numérique et qu'il est prévu un second circuit d'exploitation (2), dont l'entrée est raccordée à la ligne p d'arrivée ($p_1$) et dont la sortie est reliée à la seconde entrée du premier circuit NON-OU-Exclusif (NE1).

8. Montage selon la revendication 7, caractérisé par le fait qu'une première entrée d'un premier circuit OU-Exclusif (E1) est raccordée à la première sortie ($1_1$) du premier circuit d'exploitation (1), qu'une seconde entrée du premier circuit OU-Exclusif (E1) est également raccordée à la première sortie ($1_1$) du premier circuit d'exploitation (1) par l'intermédiaire d'une première ligne à retard (T1) fournissant un temps de retard t1 > la durée d'une impulsion de comptage pour le passage du 1 logique au 0 logique, qu'un circuit OU (OR1) est raccordé entre la sortie du second circuit d'exploitation (2) et la seconde entrée du premier circuit NON-OU-Exclusif (EN1), et qu'une seconde entrée du circuit OU (OR1) est reliée à la sortie du premier circuit OU-Exclusif (E1).

9. Montage pour un second convertisseur de signaux d'identification (SCO) pour la mise en œuvre du procédé suivant l'une des revendications 1 à 7, caractérisé par le fait qu'il est prévu une seconde interface numérique (4) qui délivre, au niveau de ses sorties ($1_4$, $2_4$), les bits d'identification ($a_r$, $b_r$) en tant qu'états ($a'_r$, $b'_r$), que les sorties ($1_4$, $2_4$) de la seconde interface numérique (4) sont reliées aux entrées ($1_6$, $2_6$) d'un premier convertisseur (6) qui réalise une conversion, correspondant à celle du premier circuit d'exploitation (1), des bits d'identification en des états de ligne, que la première entrée d'un second circuit NON-OU-Exclusif (EN2) est raccordée à la première sortie ($1_4$) de la seconde interface numérique (4) et que la seconde entrée de ce circuit est raccordée à cette même sortie de cette interface par l'intermédiaire d'une seconde ligne à retard (T2), qui applique un temps de retard t2 supérieur à la durée d'une impulsion de comptage, et que la sortie de la seconde porte NON-OU-Exclusif est reliée à l'entrée d'un second convertisseur (7) qui délivre des impulsions de comptage au conducteur p de départ ($p_2$).

10. Montage suivant l'une des revendications précédentes, caractérisé par le fait que la première entrée ($1_6$) du premier convertisseur (6) est raccordée par l'intermédiaire d'une troisième ligne à retard (T3) qui fournit, pour le passage du 0 logique au 1 logique un temps de retard t3 supérieur à la durée d'une impulsion de comptage.

11. Montage suivant l'une des revendications 8, 9, 10, caractérisé par le fait qu'il est prévu un commutateur (S) qui relie l'entrée ($1_6$) du convertisseur (6) au choix à la sortie de la seconde ligne à retard (T2), de la troisième ligne à retard (T3) ou à la première sortie ($1_4$) de la seconde interface numérique (4).

12. Montage suivant la revendication 8, caractérisé par le fait qu'entre la première sortie ($1_4$) de la seconde interface numérique (4) et la première entrée ($1_6$) du premier convertisseur est branché un montage ayant une action de filtre passe-bas, qui ne retransmet à sa sortie que des modifications d'état, dont la durée est supérieure à une impulsion de comptage.

8

# FIG 1

## FIG 1.1

a ⊥
b ⊥

E1

## FIG 1.2

a ⊥
b ⊥

E2

## FIG 1.3

a ⊥
b ⊥

E3

## FIG 1.4

p ⊥

E4

## FIG 1.5

$a_r$  1 0
$b_r$  1 0

E1,E4

## FIG 1.6

$a_r$  1 0
$b_r$  1 0

E2,(E4)

## FIG 1.7

$a_r$  1 0
$b_r$  1 0

E3

## FIG 3

$a_r$

Z1

T2

$\leftarrow$ t2 $\rightarrow$     $\leftarrow$ t2 $\rightarrow$

O3

T3

$\leftarrow$ t3 $\rightarrow$

1

FIG 2